# EUROPEAN PATENT SPECIFICATION

(11) **EP 4 355 826 B1**
(45) Date of publication and mention of the grant of the patent: **16.04.2025**
(21) Application number: 22733616.1
(22) Date of filing: 14.06.2022
(51) Int. Cl.: C08L 25/14, C08L 33/12, C08L 53/02

(54) **HIGH CLARITY AND DUCTILE MOLDING COMPOSITION COMPRISING A SMMA COPOLYMER AND A SBC-BLOCK COPOLYMER**
HOCHKLARE UND DUKTILE FORMMASSE ENTHALTEND EIN SMMA-COPOLYMER UND EIN SBC-BLOCKCOPOLYMER
COMPOSITION DE MOULAGE DUCTILE ET À CLARTÉ ÉLEVÉE COMPRENANT UN COPOLYMÈRE DE SMMA ET UN COPOLYMÈRE SÉQUENCÉ DE SBC

(30) Priority: 16.06.2021 EP 21179715
(43) Date of publication of application: 24.04.2024
(73) Proprietor: INEOS Styrolution Group GmbH, 60325 Frankfurt am Main (DE)
(72) Inventor: COCHRAN, Thomas W., Wilmington, Illinois 60481 (US); ROWLETT, Jarrett R., Oswego, Illinois 60543 (US)
(74) Representative: Jacobi, Markus Alexander
(86) International application number: PCT/EP2022/066170
(87) International publication number: WO 2022/263445

(56) References cited:
- WO-A1-03/051973
- WO-A1-03/066731
- WO-A1-2015/004043
- WO-A1-2015/071207
- WO-A1-2018/091513

## Description

The invention relates to a molding composition comprising a styrene-methyl methacrylate (SMMA) copolymer and a styrene-butadiene (SBC) block copolymer. These (thermoplastic) molding compositions and products therefrom have high clarity, hardness, heat resistance, and stiffness. The invention also relates to a process for the preparation method and to thermoplastic molding compositions and shaped articles produced therefrom and to their use.

Styrene-butadiene block copolymers are known for years to provide effective modifiers to gain impact strength in blends with styrene-methyl methacrylate copolymers while still maintaining a good transparency and/or low haze.

US 5,290,862 and US 6,734,247 describe blends of SMMA copolymers (MMA 25 to 35 wt.-%) and SBC with the SBC having a tapered, linear or radial, di-block (vinyl aromatic monomer-conjugated diene) or tri-block (vinyl aromatic monomer-conjugated diene-vinyl aromatic monomer) molecular architecture. The optical properties such as clarity and haze as well as the mechanical properties such as toughness (Notched Izod Impact strength) of the obtained materials are still in need of improvement.

WO 2018/091513 discloses a polymer composition comprising 48 to 67 wt.-% of a SMMA copolymer (MMA content: 10 to 35 wt.-%) and 33 to 52 wt.-% of a star-shaped vinyl- aromatic diene block copolymer (diene content: 15 to 50 wt.-%) comprising at least two terminal vinyl-aromatic polymer blocks S₁ and S₂ and at least one random vinyl-aromatic/diene copolymer block (B/S). Said compositions show an improved toughness and clarity. However, the heat resistance and the scratch resistance (i.e. surface hardness) of said prior art compositions are still in need of improvement.

It is an object of the invention to provide a molding composition comprising SMMA copolymers and SBC block copolymers with a good balance of stiffness and toughness, with a high surface hardness and Vicat softening temperature while maintaining a high transmittance and clarity. It is a further object of the invention to provide a SMMA/SBC-molding composition having an improved processability (i.e. in an extrusion process).

According to the invention, this object is achieved by providing a molding composition according to the claims.

One aspect of the invention is a molding composition comprising (or consisting of) the components (a), (b) and (c):
(a) 71 to 90 wt.-% of at least one random copolymer (a) made from 44 to 64 wt.-%, preferably 48 to 60 wt.-%, more preferably 50 to 58 wt.-%, vinylaromatic monomer (a11), in particular styrene, and 36 to 56 wt.-%, preferably 40 to 52 wt.-%, more preferably 42 to 50 wt.-%, methyl methacrylate (a12);
(b) 10 to 29 wt.-% of at least one vinylaromatic-diene block copolymer (b) which comprises at least two hard blocks S (preferably terminal S blocks) made from vinylaromatic monomers, in particular styrene, and at least one soft block B made from dienes and/or at least one soft block B/S made from dienes and vinylaromatic monomers,
   where the proportion of the diene - based on the entire block copolymer - is from 47 to 67 wt.-%, preferably 52 to 62 wt.-%; and
(c) 0 to 5 wt.-% of one or more additive(s) and/or processing aid(s) (c),
wherein the total amount of components (a), (b) and (c) is 100 wt.-%.

In this document, wt.-% means percent by weight.

A random copolymer (a) means a copolymer having a statistical distribution of the polymerized units of the vinylaromatic monomer and methyl methacrylate.

Preferably the molding composition according to the invention comprises (or consists of) components (a), (b) and (c) in the following amounts:
(a) 75 to 88 wt.-%,
(b) 12 to 25 wt.-%,
(c) 0 to 5 wt.-%.

More preferably the molding composition according to the invention comprises (or consists of) components (a), (b) and (c) in the following amounts:
(a) 78 to 85 wt.-%,
(b) 15 to 22 wt.-%,
(c) 0 to 3 wt.-%.

In particular preferred is a molding composition according to the invention comprising or (consisting of):
(a) 73 to 80 wt.-%.
(b) 17 to 20 wt.-%,
(c) 0 to 3 wt.-%.

If component (c) is present, its minimum amount is usually 0.1 wt.-%.

Preferred are molding compositions according to the invention wherein component (a) forms a continuous phase in which component (b) is finely dispersed.

Preferred are molding compositions wherein the values of the refractive index of components (a) and (b) differ no more than 0.01, preferably 0.005, more preferably 0.003. This results in a product of particular high clarity and low haze.

In one preferred embodiment, the molding composition according to the invention consists of the components (a), (b) and optionally (c).

### Component (a)

Preferred are random copolymers (a) - as component (a) - made from 48 to 60 wt.-% vinylaromatic monomer (a11), in particular styrene, and 40 to 52 wt.-% methyl methacrylate (a12); more preferred are random copolymers (a) made from 50 to 58 wt.-% (a11) and 42 to 50 wt.-% (a12). In said compositions the total amount of (a11) and (a12) is 100 wt.-%.

Styrene-methyl methacrylate (SMMA) copolymers (a) may be obtained in a known manner by bulk, solution, suspension, precipitation or emulsion polymerization. Details of these processes are described, for example, in Kunststoffhandbuch, ed. R. Vieweg and G. Daumiller, Vol. V "Polystyrol", Carl-Hanser-Verlag Munich, 1969, p. 118 ff. SMMA copolymers (a) are known products which are commercially available e.g. from Ineos Styrolution (Frankfurt, Germany) as NAS^{®} XC.

### Component (b)

The at least one, preferably one, vinylaromatic-diene block copolymer (b) - as component (b) - may be a linear or star-shaped block copolymer and comprises at least two hard blocks S (preferably terminal blocks) made from vinylaromatic monomers, in particular styrene, and at least one soft block B made from dienes and/or at least one soft block B/S made from dienes and vinylaromatic monomers.

Generally - based on the entire block copolymer - the proportion of the diene is from 47 to 67 wt.-%, and the proportion of the vinylaromatic monomer is from 33 to 53 wt.-%.

Preferably - based on the entire block copolymer - the proportion of the diene is from 52 to 62 wt.-%, and the proportion of the vinylaromatic monomer is from 38 to 48 wt.-%. Vinyl aromatic monomers which may be used for the hard (polymer) blocks S or else for the soft (copolymer) block B/S are styrene, α-methylstyrene, p-methylstyrene, ethylstyrene, tert-butylstyrene, vinyl toluene or mixtures of these, preferably styrene. The hard (polymer) blocks S of the block copolymer (b) are hard phases with a glass transition temperature (Tg) > 70°C.

The hard blocks S can be made from 95 to 100 wt.-% of at least one vinylaromatic monomer and 0 to 5 wt.-% of at least one diene, preferably the hard blocks S are homopolymers made from vinylaromatic monomers, in particular styrene.

Suitable dienes which may be used for the preparation of component (b) are conjugated dienes. Preferred dienes for the at least one soft block B or the at least one soft block B/S (or optionally for the hard blocks S) are 1,3-butadiene, isoprene, 2,3-dimethylbutadiene, 1,3-pentadiene, 1,3-hexadienes or piperylene or mixtures of these, particularly preferably 1,3-butadiene. The soft (polymer) block B and/or soft (copolymer) block B/S is a soft phase with a Tg < 0°C.

The soft block B may be made from 95 to 100 wt.-% of at least one diene and 0 to 5 wt.- % of at least one vinylaromatic monomer, preferably the soft block B is a homopolymer made from a conjugated diene, in particular 1,3-butadiene.

Often the soft block is a block B/S, in particular a random block B/S. A "random" block B/S means a copolymer block having a statistical distribution of the polymerized units of the vinylaromatic monomers and dienes.

Often the (copolymer) block B/S, in particular the random copolymer block B/S, is made from more than 5 to 39 wt.-%, in particular 6 to 39 wt.-%, vinylaromatic monomer, in particular styrene, and from 61 to less than 95 wt.-%, in particular 61 to 94 wt.-%, diene, in particular 1,3-butadiene, wherein the total amount of the vinyl aromatic monomer and the diene is 100 wt.-%.

Preferably block copolymer (b) is a linear block copolymer with two hard blocks S, preferably terminal hard blocks S, and, at least one soft block B and/or at least one soft block B/S.

There may also be more than one, preferably random, (copolymer) block B/S. Often block copolymer (b) comprises at least 2, in particular random, soft (copolymer) blocks (B/S), and (B/S)₂ having different proportions of vinylaromatic monomers and therefore different glass transition temperatures. For all copolymer blocks B/S such as (B/S)₁, (B/S)₂ etc, Tg is < 0°C, generally in the range between -80° to 0°C, preferably in the range from -70°C to -20°C, particularly preferably from -70 to -40°C. Tg is measured by methods known to the SBC-polymer chemist.

According to one embodiment block copolymer (b) is a block copolymer of the structure S-B-S, in particular a styrene-butadiene block copolymer of the structure S-B-S.

According to an embodiment block copolymer (b) is a block copolymer of the structure S-B/S-S, in particular a styrene-butadiene block copolymer of the structure S-B/S-S.

The block copolymers (b) are prepared preferably by sequential anionic polymerization. The aforementioned SBC products are known. Their preparation is described in "Modern Styrenic Polymers: Polystyrenes and Styrenic Copolymers" (Eds., J. Scheirs, Wiley, UK, 2003, pages 502 to 507), in Practical Guide to Structures, Properties and Applications of Styrenic Polymers; N. Niessner et al., Smithers, 2013, pp. 79-129) and in US 6,521,712 (col. 2, I. 52 to col. 4, line 2). Block copolymer (b) is a known product and commercially available as Calprene^{®} 743X from Dynasol, USA.

### Component (c)

Optionally the thermoplastic molding composition may comprise up to 5.0 wt.-%, preferably 0.10 to 3.0 wt.-%, of at least one further additive and/or processing aids (c) (as component (c)).

Suitable additives and/or processing aids (c) include all substances customarily employed for processing or finishing the polymers, except of fillers/fibers and pigments (see e.g. "Plastics Additives Handbook", Hans Zweifel, 6th edition, Hanser Publ., Munich, 2009).

Preferred additives and/or processing aids (c) are such as stabilizers (e.g. UV-stabilizers), oxidation retarders, anti-oxidants, agents to counter thermal decomposition and decomposition due to light, lubricants and dyes.

These additives and/or processing aids (c) may be admixed at any stage of the manufacturing operation, but preferably at an early stage in order to profit early on from the stabilizing effects (or other specific effects) of the added substance.

Suitable antioxidants are, e.g., one or more compounds selected from monophosphite-based antioxidants, diphosphite-based antioxidants and sterically hindered phenolic antioxidants. If one or more antioxidants are present, they are preferably selected from monophosphite-based antioxidants, such as trisubstituted monophosphite derivatives, diphosphite-based antioxidants, such as substituted pentaerythrirol diphosphite derivatives and sterically hindered phenolic antioxidants, such as 2,6-di-tertbutylphenolic derivatives.

Suitable lubricants/glidants and demolding agents include stearic acids, stearyl alcohol, stearic esters, amide waxes (bisstearylamide, in particular ethylenebisstearamide), polyolefin waxes and/or generally higher fatty acids, derivatives thereof and corresponding fatty acid mixtures comprising 12 to 30 carbon atoms.

Suitable dyes are any of the dyes which can be used for the transparent, semitransparent, or non-transparent coloring of polymers, in particular those dyes which are suitable for coloring styrene copolymers. Dyes of this type are known to the skilled worker.

Examples of oxidation retarders and heat stabilizers are halides of the metals from group I of the periodic table, examples being sodium, potassium and/or lithium halides, optionally in combination with copper (I) halides, e.g., chlorides, bromides, iodides, sterically hindered phenols, hydroquinones, different substituted representatives of these groups, and mixtures thereof, in concentrations of up to 1 wt.-%, based on the weight of the molding composition.

Examples of suitable stabilizers to counter the effect of light (e.g UV-stabilizers) are various substituted resorcinols, salicylates, benzotriazoles, benzophenones, and HALS (hindered amine light stabilizers), for example those commercially available as Tinuvin^{®}, which are generally used in amounts of up to 2 wt.-%, based on the molding composition.

### Process for the preparation

A further aspect of the invention is a process for the preparation of a molding composition according to the invention by melt-mixing of components (a), (b) and, if appropriate, component (c). Preferably the melt-mixing of the components (a), (b) and, if appropriate, (c) is performed in an extruder, preferably a twin screw extruder.

The melt-mixing may be performed, preferably in an extruder, at temperatures in the range of from 160 to 260°C.

Preferably melt-mixing is performed in an extruder at temperatures in the range of from 180 to 230°C.

The molding composition obtained by said process shows a good processability and thus can be easily processed, i.e. molded to any desired shape e.g. by extrusion and hot molding (e.g. injection molding).

Accordingly a further aspect of the invention is a shaped article produced from the molding composition according to the invention.

The molding composition according to the invention and shaped articles produced therefrom show a good balance of stiffness and toughness, with a high surface hardness and Vicat softening temperature while maintaining a high transmittance and clarity. They can advantageously be used for many applications.

A further subject of the invention is the use of molding compositions according to the invention and shaped articles produced therefrom for various applications for housewares, home appliances, thermoformed packaging and blow molded bottles.

The examples, Figures and the patent claims provide further illustrate the invention.

### Examples:

### Test methods:

Tensile stress at yield and tensile strain at break were determined in the test according to norm ASTM D638 -14.

Flexural modulus was determined in the test according to ASTM D790 -17.

Melt flow rate (MFR) was determined according to ASTM D1238 at 200°C and 5 kg.

Gardner impact strength was determined in accordance with ASTM D5420 -21.

Notched and un-notched Izod impact strength was determined in accordance with ASTM D256 -10 (2018).

Vicat softening temperature (VST) was determined according to ASTM D1525 (10 N force and 120°C/hour rate).

Rockwell hardness was determined according to ASTM D785.

Haze and optical properties (transmission, clarity) were determined in accordance with ASTM D1003.

### Starting materials:

- SMMA (a): NAS^{®} XC from Ineos Styrolution, Germany; random styrene/methyl methacrylate-copolymer, MMA content: 45 wt.-%.
- SBS (b): Calprene^{®} 743X from Dynasol, Spain; linear styrene butadiene SBS block copolymer; total styrene content 43 wt.-%.

The materials as shown in Tables 1 to 4 were melt-mixed using a 30 mm twin screw extruder with zone temperatures set from 180 to 230°C. From the obtained molding compositions specimens were injection molded and the parts tested for their mechanical and optical properties. Tables 1 to 4 show the properties of the injection molded specimens made as a function of the block copolymer (b) content for examples 1 to 10.

Tables 1 to 4 further evidence the benefit of samples according to the invention (Examples 1 to 10) as compared to current commercial styrenic impact modified clear molding compositions such as Terlux^{®} 2802, Terlux 2812 (both methacrylate acrylonitrile butadiene styrene (MABS) resins), Zylar^{®} 631 (impact modified styrene acrylic copolymer (methyl methacrylate butadiene styrene (MBS) resin), Zylar 720 EX (MBS resin) and Denka TH-21 (MBS resin) used in comparative Examples 1 to 5.

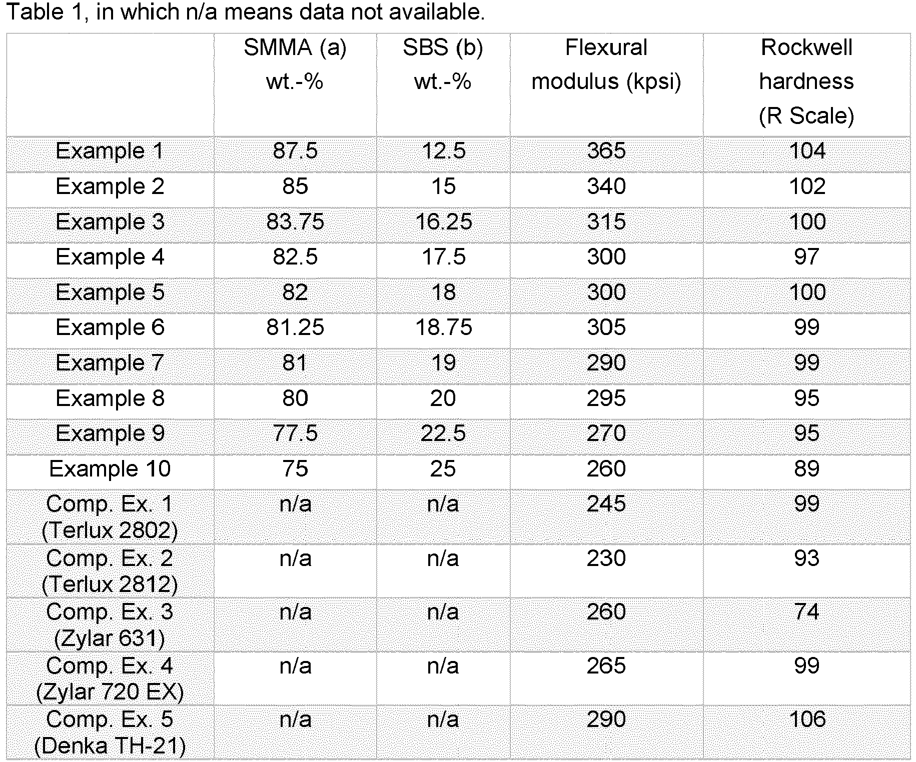

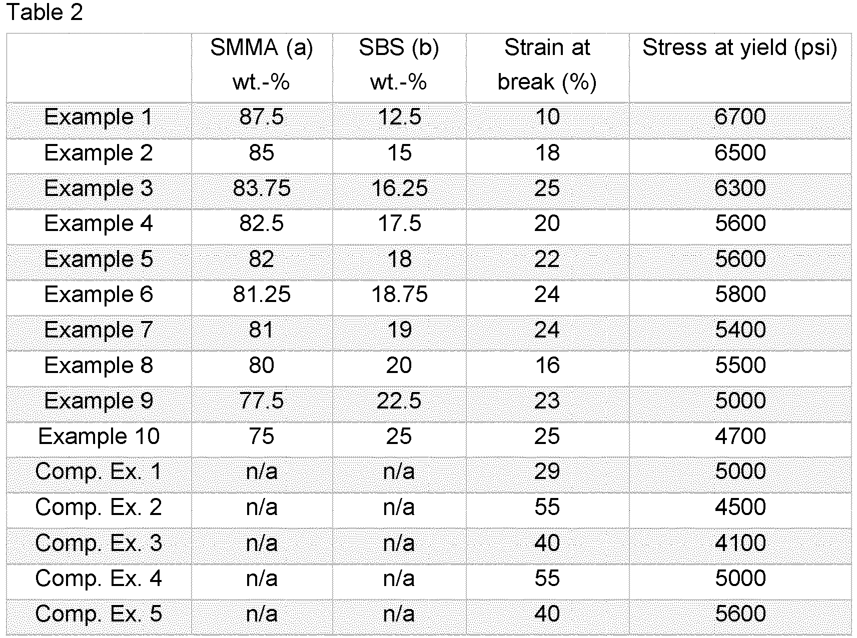

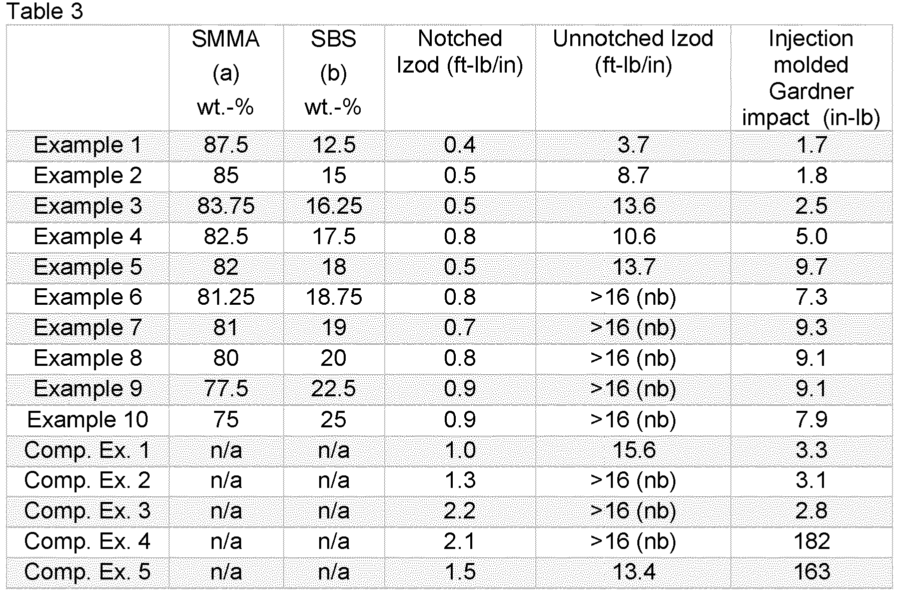

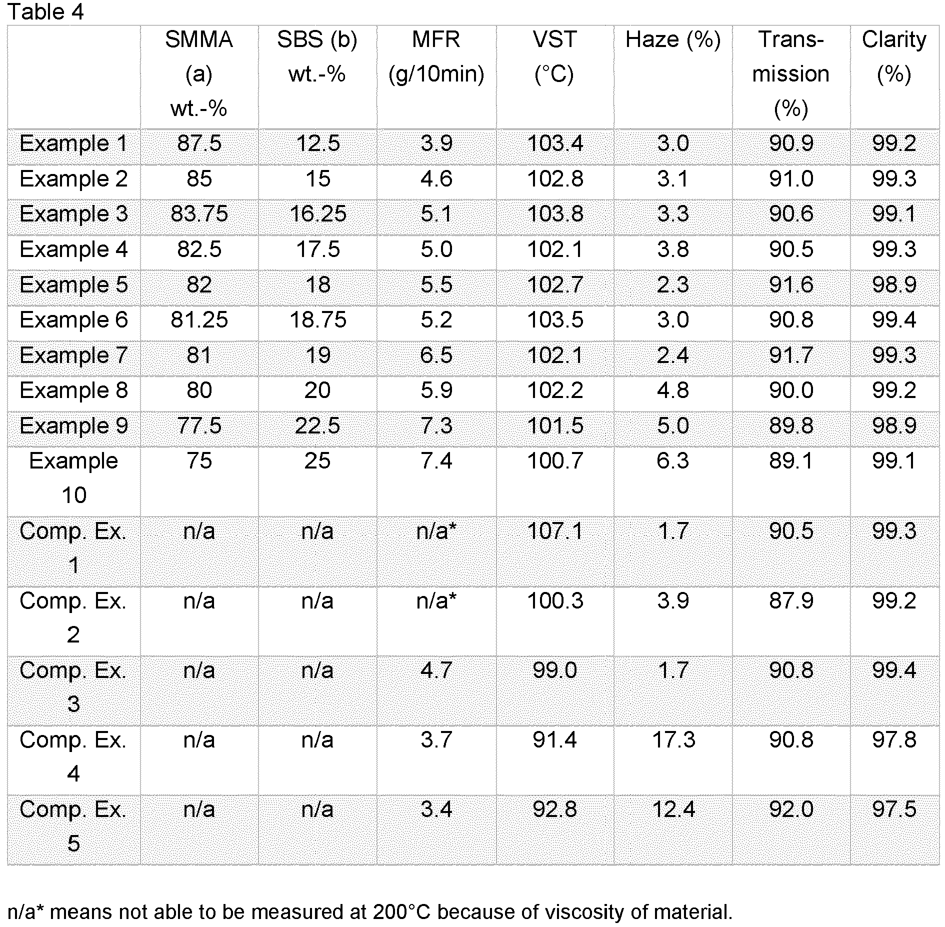

As shown by Tables 1 to 4 the molding compositions according to the invention (examples 1 to 10) create a better balance of stiffness and toughness, with higher hardness and Vicat softening temperature being achieved without a sacrifice in appearance compared to current commercial styrenic impact modified clear molding compositions. By using a rubber component (block copolymer (b)) with a specific high diene content in combination with a specific SMMA copolymer having a high MMA-content, lower amounts of the rubber component are needed, which provides an SMMA continuous phase with the rubber component (b) finely dispersed therein while maintaining high transmittance and clarity.

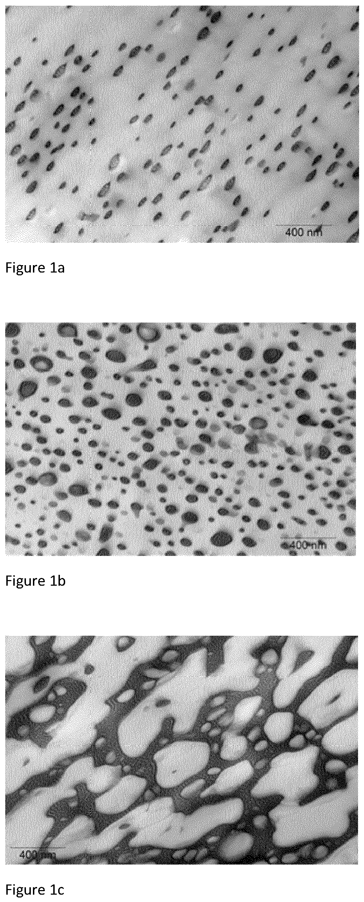

Figures 1a, 1b and 1c are TEM images which show the morphology of SMMA/SBS molding compositions - obtained by an extrusion molding process - which differ only in the amount of SBS rubber component (b).

Figure 1a shows a SMMA/SBS molding composition according to the invention having a SBS rubber component content of 10 wt.-%.

Figure 1b shows a SMMA/SBS molding composition according to the invention having a SBS rubber component content of 20 wt.-%.

Figure 1c shows a SMMA/SBS molding composition (non-inventive) having a SBS rubber component content of 30 wt.-%.

The molding compositions according to the invention with 10 wt.-% or 20 wt.-% SBS rubber component (b) (cp. Figures 1a and 1b) show an SMMA continuous phase in which the SBS rubber component is finely dispersed whereas a corresponding molding composition with 30 wt.-% SBS rubber component has a changed - i.e. discontinuous - morphology for the SMMA (cp. Figure 1c).

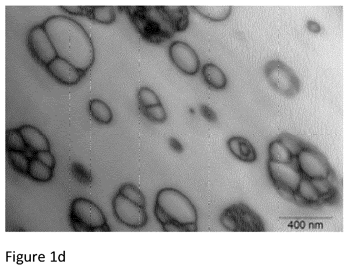

Figure 1d is a TEM image which shows an impact modified SMMA copolymer according to comparative example 5 (Denka TH-21) which is made via a reactor technology by adding the rubber component to the polymerization reaction of styrene and MMA monomers.

Preferred molding compositions according to the invention form a SMMA continuous phase in which the SBS rubber component (b) is dispersed which allows for better extrusion, thermal and chemical resistance, while maintaining high transmittance and clarity (cp. Figures 1 and 2 and Table 4).

The composition comprising a SMMA copolymer and a SBC-block copolymer as described by the invention showed high clarity and ductile properties.

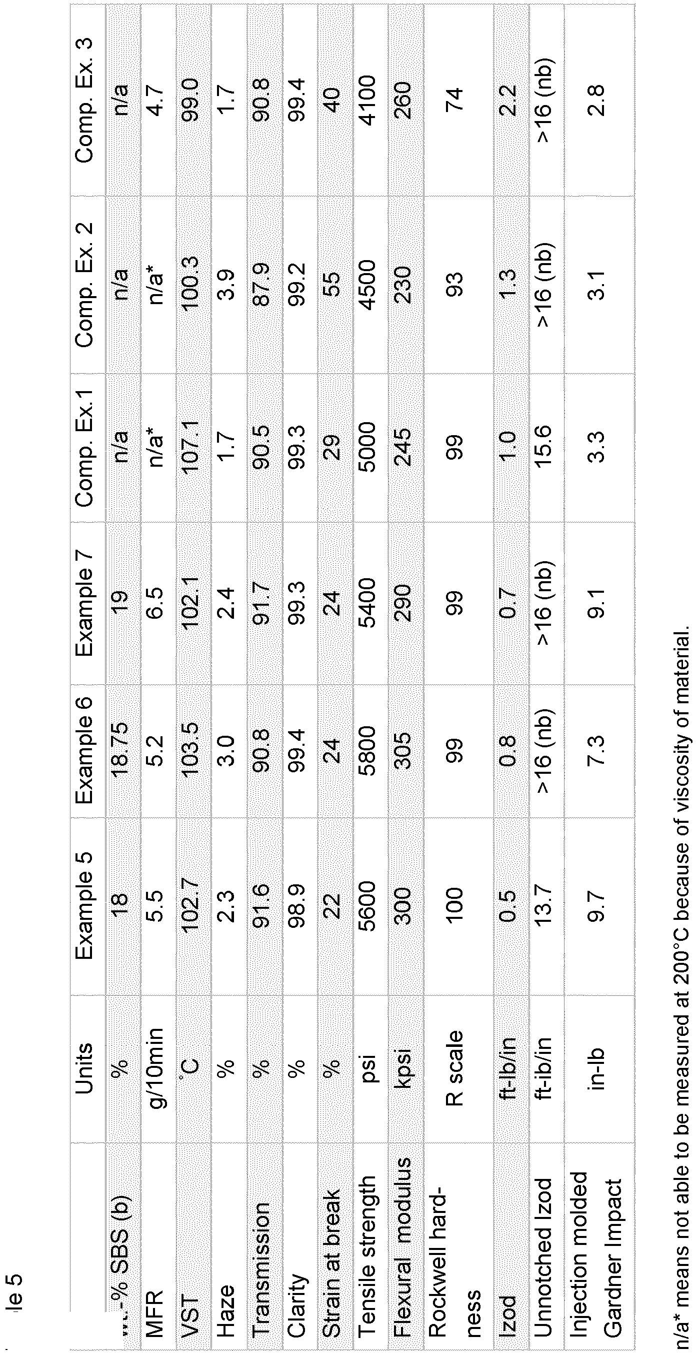

As shown on Tables 1 to 4 the molding compositions of Examples 5 to 7 have the optimal loading level of the SBS rubber component (B) to achieve the best balance of properties.

Table 5 demonstrates the benefits of the molding compositions of Examples 5 to 7 compared to current commercial styrenic impact modified clear resins (see comp. Ex. 1 to 3). Compared to clear MABS products of comparative examples 1 and 2 - the molding compositions of examples 5 to 7 have a higher melt flow rate, tensile strength and Gardner impact strength, while maintaining similar hardness, VST, and optical properties. When comparing the molding compositions of Examples 5 to 7 to a current commercial MBS product of comparative example 3, the benefit in the hardness, stiffness, and Vicat is significant.

Furthermore, the molding compositions according to the invention (cp. Examples 5 to 7) obtained by melt-mixing of components (a) and (b) via extrusion exhibit superior optical properties, higher stiffness, and a higher VST compared to a molding composition prepared via polymerization of the MMA and styrene monomers in presence of a rubber component in a reactor (cp. Table 6, Comparative Examples 4 and 5).

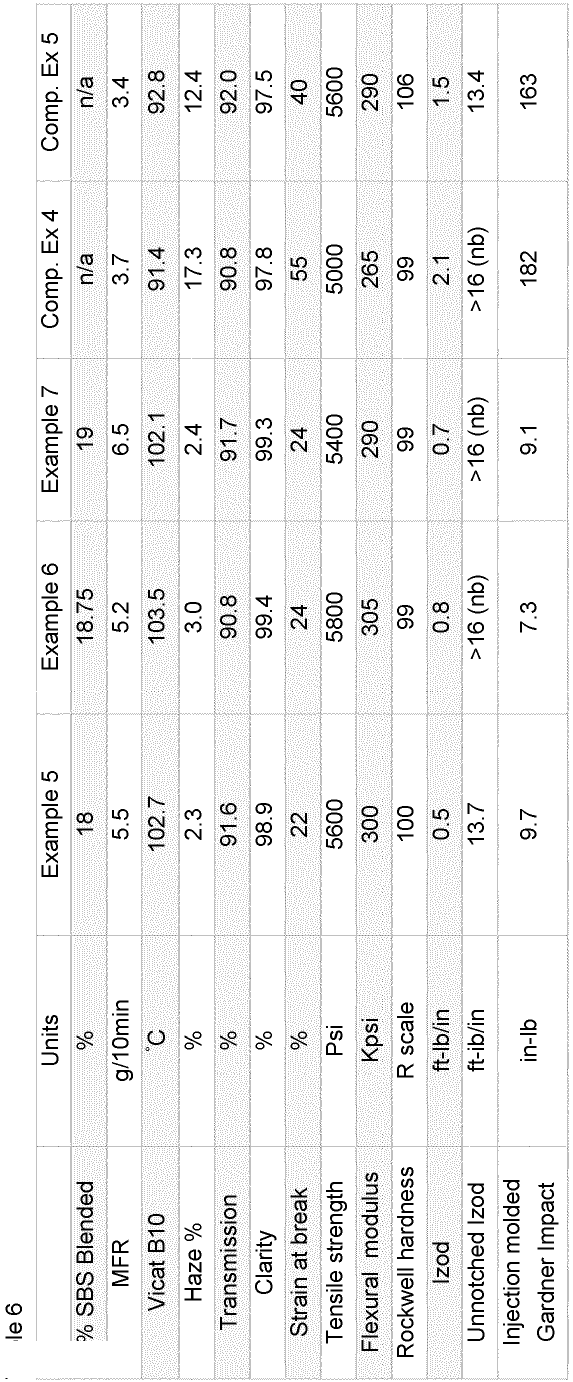

## Claims

1. Molding composition comprising components (a), (b) and (c),
(a) 71 to 90 wt.-% of at least one random copolymer (a) made from 44 to 64 wt.-% of at least one vinylaromatic monomer (a11), in particular styrene, and 36 to 56 wt.-%, methyl methacrylate (a12);
(b) 10 to 29 wt.-% of at least one vinylaromatic-diene block copolymer (b) which comprises at least two, preferably terminal, hard blocks S made from vinylaromatic monomers, in particular styrene, and at least one soft block B made from dienes, in particular butadiene, and/or at least one soft block B/S made from dienes and vinylaromatic monomers, in particular butadiene and styrene;
where the proportion of the diene - based on the entire block copolymer (b) - is from 47 to 67 wt.-%; and
(c) 0 to 5 wt.-% of one or more additive(s) and/or processing aid(s) (c),
wherein the total amount of components (a), (b) and (c) is 100 wt.-%.

2. Molding composition according to claim 1 comprising:
75 to 88 wt.-%, preferably 78 to 85 wt.-%, of component (a)
12 to 25 wt.-%, preferably 15 to 22 wt.-%, of component (b),
0 to 5 wt.-%, preferably 0 to 3 wt.-%, of component (c).

3. Molding composition according to claim 1 comprising:
73 to 80 wt.-% component (a)
17 to 20 wt.-% component (b),
0 to 3 wt.-% of component (c).

4. Molding composition according to claim 1 consisting of:
73 to 80 wt.-% component (a)
17 to 20 wt.-% component (b),
0.1 to 3 wt.-% of component (c).

5. Molding composition according to any of claims 1 to 4 wherein the values of the refractive index (at 589.3 nm) of components (a) and (b) differ no more than 0.01.

6. Molding composition according to any of claims 1 to 5 wherein random copolymer (a) is made from 48 to 60 wt.-%, preferably 50 to 58 wt.-%, vinylaromatic monomer (b11), in particular styrene, and 40 to 52 wt.-%, preferably 42 to 50 wt.-%, methyl methacrylate (b12).

7. Molding composition according to any of claims 1 to 6 wherein the proportion of the diene of vinylaromatic-diene block copolymer (b) is 52 to 62 wt.-%.

8. Molding composition according to any of claims 1 to 7 wherein component (b) is a linear block copolymer with two terminal hard blocks S and, at least one soft block B and/or at least one soft block B/S.

9. Molding composition according to any of claims 1 to 8 wherein component (b) is a styrene-butadiene block copolymer of the structure S-B-S or S-B/S-S.

10. Molding composition according to any of claims 1 to 9 wherein component (a) forms a continuous phase in which component (b) is finely dispersed.

11. Process for the preparation of a molding composition according to any of claims 1 to 10 wherein components (a) and (b) and, if appropriate, component (c) are melt-mixed, preferably by extrusion.

12. Shaped article produced from the molding composition according to any of claims 1 to 10.

13. Use of the molding composition according to any of claims 1 to 10 or of a shaped article according to claim 12 for housewares, home appliances, thermoformed packaging and blow molded bottles.

## Patentansprüche

1. Formmasse umfassend Komponenten (a), (b) und (c),
(a) 71 bis 90 Gew.-% mindestens eines statistischen Copolymers (a) hergestellt aus 44 bis 64 Gew.-% mindestens eines vinylaromatischen Monomers (a11), insbesondere Styrol, und 36 bis 56 Gew.-% Methylmethacrylat (a12);
(b) 10 bis 29 Gew.-% mindestens eines Vinylaromat-Dien-Blockcopolymers (b), umfassend mindestens zwei, vorzugsweise endständige, harte Blöcke S hergestellt aus vinylaromatischen Monomeren, insbesondere Styrol, und mindestens einen weichen Block B hergestellt aus Dienen, insbesondere Butadien, und/oder mindestens einen weichen Block B/S hergestellt aus Dienen und vinylaromatischen Monomeren, insbesondere Butadien und Styrol;
wobei der Anteil des Diens - bezogen auf das gesamte Blockcopolymer (b) - 47 bis 67 Gew.-% beträgt; und
(c) 0 bis 5 Gew.-% eines oder mehrerer Additiv(e) und/oder Verarbeitungshilfsmittel (c),
wobei die Gesamtmenge der Komponenten (a), (b) und (c) 100 Gew.-% beträgt.

2. Formmasse nach Anspruch 1 umfassend:
75 bis 88 Gew.-%, bevorzugt 78 bis 85 Gew.-%, an Komponente (a)
12 bis 25 Gew.-%, bevorzugt 15 bis 22 Gew.-%, an Komponente (b),
0 bis 5 Gew.-%, bevorzugt 0 bis 3 Gew.-%, an Komponente (c).

3. Formmasse nach Anspruch 1 umfassend:
73 bis 80 Gew.-% Komponente (a)
17 bis 20 Gew.-% Komponente (b),
0 bis 3 Gew.-% an Komponente (c).

4. Formmasse nach Anspruch 1 umfassend:
73 bis 80 Gew.-% Komponente (a)
17 bis 20 Gew.-% Komponente (b),
0,1 bis 3 Gew.-% an Komponente (c).

5. Formmasse nach einem beliebigen der Ansprüche 1 bis 4, wobei die Werte des Brechungsindex (bei 589,3 nm) der Komponenten (a) und (b) um nicht mehr als 0,01 voneinander abweichen.

6. Formmasse nach einem beliebigen der Ansprüche 1 bis 5, wobei das statistische Copolymer (a) hergestellt ist aus 48 bis 60 Gew.-%, vorzugsweise 50 bis 58 Gew.-%, vinylaromatischem Monomer (b11), insbesondere Styrol, und 40 bis 52 Gew.-%, vorzugsweise 42 bis 50 Gew.-%, Methylmethacrylat (b12).

7. Formmasse nach einem beliebigen der Ansprüche 1 bis 6, wobei der Anteil des Diens des vinylaromatischen Dien-Blockcopolymers (b) 52 bis 62 Gew.-% beträgt.

8. Formmasse nach einem beliebigen der Ansprüche 1 bis 7, wobei die Komponente (b) ein lineares Blockcopolymer mit zwei endständigen harten Blöcken S und mindestens einem weichen Block B und/oder mindestens einem weichen Block B/S ist.

9. Formmasse nach einem beliebigen der Ansprüche 1 bis 8, wobei die Komponente (b) ein Styrol-Butadien-Blockcopolymer mit der Struktur S-B-S oder S-B/S-S ist.

10. Formmasse nach einem beliebigen der Ansprüche 1 bis 9, wobei die Komponente (a) eine kontinuierliche Phase bildet, in der die Komponente (b) fein dispergiert ist.

11. Verfahren zur Herstellung einer Formmasse nach einem beliebigen der Ansprüche 1 bis 10, wobei die Komponenten (a) und (b) und gegebenenfalls die Komponente (c) schmelzvermischt werden, vorzugsweise durch Extrusion.

12. Formkörper hergestellt aus der Formmasse nach einem beliebigen der Ansprüche 1 bis 10.

13. Verwendung der Formmasse nach einem beliebigen der Ansprüche 1 bis 10 oder eines Formkörpers nach Anspruch 12 für Haushaltswaren, Haushaltsgeräte, thermogeformter Verpackungen und blasgeformter Flaschen.

## Revendications

1. Composition de moulage comprenant les composants (a), (b) et (c),
(a) 71 à 90 % en poids d'au moins un copolymère statistique (a) composé de 44 à 64 % en poids d'au moins un monomère vinylaromatique (a11), en particulier de styrène, et 36 à 56 % en poids de méthacrylate de méthyle (a12) ;
(b) 10 à 29 % en poids d'au moins un copolymère à blocs vinylaromatique-diène (b) qui comprend au moins deux blocs durs S, de préférence terminaux, composés de monomères vinylaromatiques, en particulier de styrène, et au moins un bloc souple B composé de diènes, en particulier de butadiène, et/ou au moins un bloc souple B/S composé de diènes et de monomères vinylaromatiques, en particulier de butadiène et de styrène ;
où la proportion du diène - par rapport à la totalité du copolymère à blocs (b) - est de 47 à 67 % en poids ; et
(c) 0 à 5 % en poids d'un ou plusieurs additifs et/ou auxiliaires de traitement (c),
dans laquelle la quantité totale des composants (a), (b) et (c) est de 100 % en poids.

2. Composition de moulage selon la revendication 1, comprenant :
75 à 88 % en poids, de préférence 78 à 85 % en poids, du composant (a)
12 à 25 % en poids, de préférence 15 à 22 % en poids, du composant (b),
0 à 5 % en poids, de préférence 0 à 3 % en poids, du composant (c).

3. Composition de moulage selon la revendication 1, comprenant :
73 à 80 % en poids du composant (a)
17 à 20 % en poids du composant (b),
0 à 3 % en poids du composant (c).

4. Composition de moulage selon la revendication 1, constituée de :
73 à 80 % en poids du composant (a)
17 à 20 % en poids du composant (b),
0,1 à 3 % en poids du composant (c).

5. Composition de moulage selon l'une quelconque des revendications 1 à 4, dans laquelle les valeurs de l'indice de réfraction (à 589,3 nm) des composants (a) et (b) ne diffèrent pas de plus de 0,01.

6. Composition de moulage selon l'une quelconque des revendications 1 à 5, dans laquelle le copolymère statistique (a) est composé de 48 à 60 % en poids, de préférence de 50 à 58 % en poids, de monomère vinylaromatique (b11), en particulier de styrène, et de 40 à 52 % en poids, de préférence de 42 à 50 % en poids, de méthacrylate de méthyle (b12).

7. Composition de moulage selon l'une quelconque des revendications 1 à 6, dans laquelle la proportion du diène du copolymère à blocs vinylaromatique-diène (b) est de 52 à 62 % en poids.

8. Composition de moulage selon l'une quelconque des revendications 1 à 7, dans laquelle le composant (b) est un copolymère à blocs linéaire comportant deux blocs durs terminaux S et au moins un bloc souple B et/ou au moins un bloc souple B/S.

9. Composition de moulage selon l'une quelconque des revendications 1 à 8, dans laquelle le composant (b) est un copolymère à blocs styrène-butadiène de structure S-B-S ou S-B/S-S.

10. Composition de moulage selon l'une quelconque des revendications 1 à 9, dans laquelle le composant (a) forme une phase continue dans laquelle le composant (b) est finement dispersé.

11. Procédé de préparation d'une composition de moulage selon l'une quelconque des revendications 1 à 10, dans lequel les composants (a) et (b) et, le cas échéant, le composant (c) sont mélangés à l'état fondu, de préférence par extrusion.

12. Article façonné produit à partir de la composition de moulage selon l'une quelconque des revendications 1 à 10.

13. Utilisation de la composition de moulage selon l'une quelconque des revendications 1 à 10 ou d'un article façonné selon la revendication 12 pour des articles ménagers, des appareils ménagers, un emballage thermoformé et des bouteilles moulées par soufflage.
